**Europäisches Patentamt**

**European Patent Office**

**Office européen des brevets**

(19)

(11) Publication number: **0 108 841**
**B1**

# (12) EUROPEAN PATENT SPECIFICATION

(45) Date of publication of patent specification: **04.05.88**

(51) Int. Cl.⁴: **F 16 H 1/32**

(21) Application number: **82305863.1**

(22) Date of filing: **04.11.82**

(54) **Improved hypocyclic drive transmission apparatus.**

(43) Date of publication of application:
**23.05.84 Bulletin 84/21**

(45) Publication of the grant of the patent:
**04.05.88 Bulletin 88/18**

(84) Designated Contracting States:
**AT BE CH DE FR GB IT LI LU NL SE**

(56) References cited:
**DD-A- 32 170**
**DE-A-2 007 853**
**DE-C- 359 167**
**GB-A-1 101 522**
**US-A-2 250 259**
**US-A-3 572 151**
**US-A-4 014 224**
**US-A-4 023 441**
**US-A-4 306 540**

(73) Proprietor: **Curtis, Lloyd Stuart**
**R.F.D. 2,**
**Dodge City Kansas 67801 (US)**

(72) Inventor: **Skaggs, Riley E.**
**Rural Route 3**
**Dodge City Kansas 67801 (US)**

(74) Representative: **Abbie, Andrew Kenneth et al**
**A.A. THORNTON & CO. Northumberland House**
**303/306 High Holborn**
**London, WC1V 7LE (GB)**

Courier Press, Leamington Spa, England.

## Description

The present invention relates generally to transmission apparatus and more specifically an improved hypocyclic transmission which has found particular utility in conjunction with self-propelled, wheel-driven apparatus, such as irrigation systems, mowers, and earth moving equipment, but which may be used in any application where strength and stability are required while reducing the rotational speed of the output of a power source and simultaneously increasing the torque thereof.

Frequently, it has been found to be desirable or necessary to rotate a drive wheel member, especially in such applications as self-propelled circular irrigation systems, mowers and earth moving equipment, at a relatively low speed and at high torque, but with a minimum loss of power such as might be caused by the inefficiency of the transmission. For example, the drive wheels on a circular irrigation system optimally require a speed of approximately ½ a revolution per minute and a torque of 50,000 inch pounds (5649.25 N m), at high efficiency preferably of the order of approximately 80—90 percent. As conventional power sources will not operate at such a low speed and high torque, speed reduction gearing must be used.

Speed reduction gears comprising: a transmission spindle shaft rotatable about a central axis in a first rotational direction: a circular gear having first and second sets of lug-shaped, external gear teeth, said circular gear being operatively connected to said transmission spindle shaft for rotational movement thereby; a fixedly disposed annulus gear having lug-shaped internal gear teeth, the internal gear teeth of said annulus gear being engageable with the first set of external gear teeth of said circular gear upon overlap between said circular gear and said annulus gear; eccentric means fixedly mounted on said transmission spindle shaft, said eccentric means having a center defining a cam offset distance from said spindle shaft central axis, and freely mounting said circular gear for maintaining said circular gear and said annulus gear in overlapping relationship, for engaging the respective gear teeth thereof, and for tracing a hypocycloid at reduced rotational speed within said annulus gear by said circular gear in a second rotational direction which is opposite the first rotational direction of said transmission spindle shaft, said overlap defining a point of maximum overlap; a rotatable drive hub having internally disposed lug-shaped teeth and disposed to surround a portion of said circular gear, the internal teeth of said drive hub engaging the second set of external gear teeth of said circular gear upon overlap between said circular gear and said drive hub; and rotational output means connected to said drive hub for receiving the reduced rotational speed output are known from the prior art, e.g. from US—A—4023441.

The present invention relates to a transmission apparatus of the type characterised in that the first set of external gear teeth of said circular gear and the internal gear teeth of said annulus gear are disengaged at said point of maximum overlap, and are in engagement at a circumferential distance of greater than 0 degrees but less than 90 degrees in one circumferential direction only from said point of maximum overlap.

The preferred embodiments of the present invention provide improved speed reducing drives of uncomplicated, reliable, and compact construction which are highly efficient and relatively inexpensive and by which an output may be driven at relatively low speeds and high torque from any applicable power source.

In certain embodiments of the improved hypocyclic transmission apparatus of the present invention the greatest length of engagement between the gear teeth is nearest the point of maximum overlap, and the length of engagement decreases for the gear teeth disposed at increasing distance from the point of maximum overlap, whereby the respective gear teeth first come under load at the maximum engagement and tip loading is thereby prevented, whereby frictional loss and tip damage are decreased.

In the preferred embodiment of the present invention the second set of external gear teeth of the circular gear and internal teeth of the drive hub are disengaged at the point of maximum overlap thereof and engage at a distance greater than 0° but less than 90° from the point of maximum overlap.

Preferably the maximum length of engagement between the teeth of the second set of gear teeth of the circular gear and the internal teeth of the drive hub is near the point of maximum overlap between the circular gear and the drive hub, and the length of the engagement for gear teeth disposed at increasing distances from the point of maximum overlap diminishes, whereby the respective gear teeth first come under load at maximum engagement.

Preferably, the gears are of such configuration that they may be made of a non-machined material, e.g. by forging, casting moulding or extrusion of plastic material.

Drive means may be disposed between two output wheels for simultaneously driving a pair of hypocyclic speed reduction drive transmissions whereby both such wheels are driven.

The invention will be better understood from the following description of preferred embodiments thereof, reference being had to the accompanying drawings, wherein:

Figure 1 is a longitudinal, cross-sectional view through a preferred embodiment of transmission apparatus of the present invention;

Figure 2 is a transverse, cross-sectional view of the transmission apparatus of Figure 1 taken along line 2—2 of Figure 1;

Figure 3 is a transverse cross-sectional view of the embodiment of Figures 1 and 2 taken along line 3—3 of Figure 1;

Figure 4 is an enlarged view of a portion of Figure 2, showing the details of the engagement between the first set of gear teeth of the circular gear and the internal gear teeth of the fixedly disposed annulus gear; and

Figure 5 is a transverse, cross-sectional view similar to that of Figure 3 of an alternative preferred embodiment of the present invention.

The improved transmission apparatus of the present invention functions to reduce the rotational speed of the output of the power source, such as for example an electric or hydraulic motor, and to increase the torque thereof. The improved transmission apparatus includes a transmission spindle shaft which rotates in a first direction. A circular gear having first and second sets of external gear teeth is operatively connected to the transmission spindle shaft for rotational movement thereby. A fixedly disposed annulus gear having internal gear teeth is engageable thereby with the first set of external gear teeth of the circular gear upon overlap therebetween. An eccentric means, such as a cam or crank arm, is fixedly mounted on the transmission spindle shaft and mounts the circular gear thereon through a central opening therein. The result is free rotation about the shaft by means of bearings to maintain the circular gear and the annulus gear in overlapping relationship, engagement of the respective gear teeth thereof, and tracing by such circular gear of a hypocycloid at reduced rotational speed within the annulus gear in a second direction, which is opposite to the first direction of rotation of the transmission spindle shaft. A rotatable drive hub has internally disposed gear teeth and is disposed to surround a portion of the circular gear for engaging the second set of external gear teeth of the circular gear upon overlap therebetween. A rotational output means, such as an output shaft, is connected to the drive hub for receiving the reduced rotational speed output at increased torque. The output from the rotational output means may be transmitted to means such as a connected wheel for accomplishing work.

In one preferred embodiment the number of internal gear teeth of the annulus gear is greater than the number of gear teeth of the first set of external gear teeth of the circular gear. The number of internal gear teeth of the drive hub may be the same as the number of gear teeth of the second set of external gear teeth of the circular gear. In a second preferred embodiment, the number of internal gear teeth of the second set of external gear teeth of the circular gear is less than the number of teeth of the drive hub. In such second preferred embodiment the difference in the number of gear teeth between the first set of external gear teeth and the annulus gear is the same as the difference in number of teeth between the drive hub and the second set of external gear teeth, although the number of gear teeth in the first set of external gear teeth and the drive hub need not be the same.

In embodiments of the improved transmission apparatus of the present invention where the first and second sets of external gear teeth are the same in number, each gear tooth of the first set of external gear teeth of the circular gear corresponds to a gear tooth on the second set of external gear teeth of the circular gear, and such corresponding gear teeth are disposed in a common plane, which plane is longitudinal to the axis of rotation of the circular gear.

Each of the first and second sets of external gear teeth of the circular gear is circumferentially disposed on the circular gear in separate transverse planes disposed in spaced relationship normally the axis of rotation of the circular gear.

Motor linking means for drivingly connecting the motor and the transmission spindle shaft are further preferably provided. Such motor linking means may be disposed perpendicularly of the transmission spindle shaft, or alternatively may be disposed in line therewith. In embodiments where the motor linking means is disposed perpendicularly of the transmission spindle shaft, the motor linking means preferably comprises a motor output shaft mounting a beveled gear for rotation thereby, with the beveled gear engaging a mating beveled gear on the transmission spindle shaft, whereby the rotational drive from the motor is transmitted for driving the transmission spindle shaft having an axis of rotation perpendicular to the axis of rotation of the motor output shaft. In such case, the motor output shaft is journaled for rotation within bearings on at least one longitudinal side of the beveled gear mounted thereon. Alternatively, the power source may be directly coupled to the transmission spindle shaft.

It is further contemplated to include a housing for the improved transmission apparatus, which housing may be sealed, and which may be substantially filled with a lubricant material. Such housing may further include a diaphragm communicating with the interior of the housing for controlling the pressure and volume thereof.

In one preferred embodiment, the length of engagement between the teeth of the first set of gear teeth of the circular gear and those of the annulus gear is greatest nearest the point of maximum overlap between the circular and annulus gears, and the length of such engagement diminishes for gear teeth disposed at increasing distance from the point of maximum overlap, whereby the respective gear teeth first come under load while at maximum engagement.

In the alternative preferred embodiment, wherein the number of gear teeth in the first and second sets of external gear teeth of the circular gear is not the same, the external gear teeth of the circular gear first come under load while at minimal engagement and such engagement occurs at a distance of greater than 0° but less than 90° as measured in the first direction.

In the preferred embodiment of the present invention the overlap between the second set of external gear teeth of the circular gear and the internal gear teeth of the rotational output hub defines a point of maximum overlap therebetween. At such point of maximum overlap, the second set of external gear teeth of the circular gear and the internal gear teeth of the rotational output hub are in disengaged disposition, and are in engaged disposition at a distance of greater than 0° but less than 90°, as measured in the first direction in the first preferred embodiment, but as measured in the second direction in the alternative preferred embodiment wherein the number of gear teeth in the first and second sets of external gear teeth of the circular gear are not the same.

The length of such engagement between the teeth of the second set of gear teeth of the circular gear and those of the rotational output hub is preferably greatest nearest the point of maximum overlap between the circular gear and the rotational output hub, the length of such engagement diminishing for gear teeth disposed at increasing distance from the point of maximum overlap in the embodiments where the number of gear teeth in the first and second sets of external gear teeth are equal in number, and the opposite for alternative preferred embodiments where such number of gear teeth is not the same.

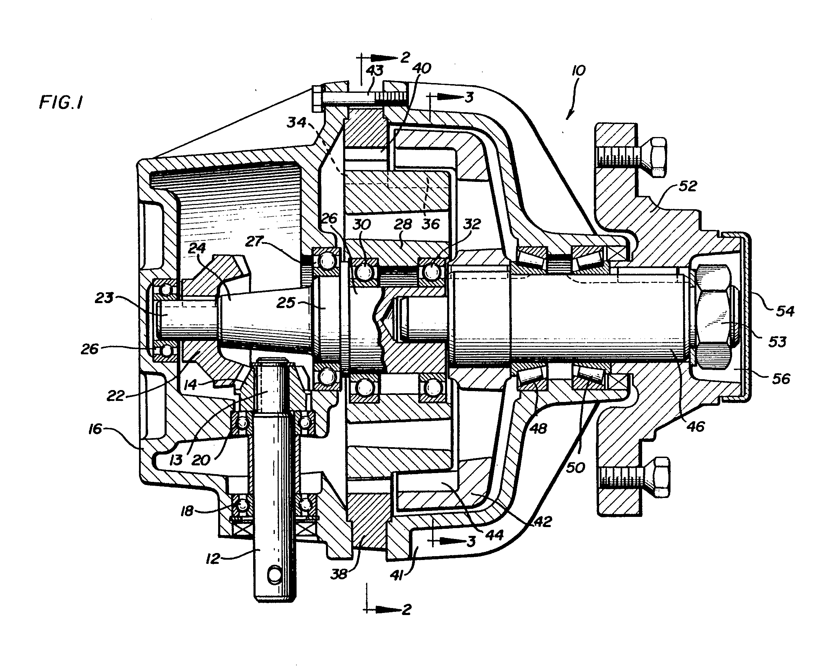

Referring now to the drawing and to Fig. 1 in particular, the improved transmission apparatus of the present invention, generally designated at 10, includes a motor output shaft 12 ·having mounted at the distal end 13 thereof a beveled gear 14. Output shaft 12 is mounted in a first housing portion 16 and journaled for rotation by means of bearings 18 and 20. Motor shaft beveled gear 14 matingly engages transmission spindle shaft beveled gear 22, which is fixedly mounted on the transmission spindle shaft 24. Transmission spindle shaft 24 is mounted on housing 16 and journaled for rotation therein by means of bearings 26, 27. As set forth in Fig. 1, motor output shaft 12 may be disposed perpendicularly to transmission spindle shaft 24. In other embodiments, motor output shaft 12 may be disposed in-line disposition with transmission spindle shaft 24.

The distal end 25 of transmission spindle shaft 24 has an eccentric 26 fixedly mounted thereon for eccentric rotation thereby. Eccentric 26 is rotationally mounted in a circular gear 28 by means of bearings 30, 32.

Circular gear 28 is operatively connected to transmit the rotational motion of transmission spindle shaft 24 through and by means of eccentric 26. Circular gear 28 has first and second sets of external gear teeth 34, 36. An annulus gear 38 having internal gear teeth 40 is fixedly mounted with respect to circular gear 28 by fixed attachment between first housing portion 16 and second housing portion 41, which portions are secured by housing connecting bolts 43. Eccentric 26 is fixedly mounted on transmission spindle shaft 24 and freely mounted thereon for rotation thereabout is circular gear 28 for maintaining circular gear 28 and annulus gear 38 in overlapping relationship, for engaging their respective gear teeth, namely the first set of external gear teeth 34 of circular gear 28 and internal gear teeth 40 of fixedly disposed annulus gear 38, for rotation of circular gear 28 under the influence of annulus gear 38 in a second radial direction which is opposite to the first radial direction of the transmission spindle shaft 24.

A rotatable drive hub 42 having internally disposed gear teeth 44 is disposed to surround a distal portion of circular gear 28, with internal gear teeth 44 of drive hub 42 engaging the second set of external gear teeth 36 of circular gear 28 to provide overlap between circular gear 28 and drive hub 42. Connected to drive hub 42 is rotational output shaft 46 which is journaled for rotation by bearings 48, 50 within second housing portion 41. An output wheel 52 is fixedly attached to output shaft 46 by means of a wheel hub bolt 53.

The housing is preferably sealed and may be filled with a lubricant. A diaphragm 54 is sealingly disposed on housing 41 adjacent to wheel hub bolt 53 to form a sealed chamber 56 for controlling the pressure and volume of the interior of the housing.

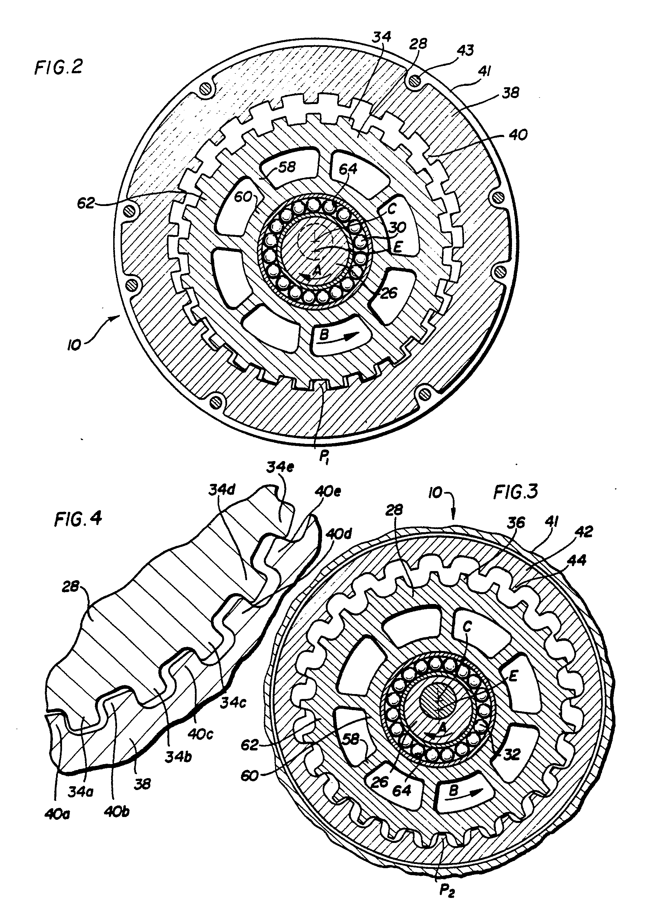

Referring now to Fig. 2, housing 41 for the improved transmission apparatus 10 of the present invention is shown with housing connecting bolts 43 for holding together the two portions 16, 41 of the housing, as described hereinabove. Housing connecting bolts 43 likewise serve to fixedly dispose annulus gear 38 with respect to the housing. Annulus gear 38 includes a designated number of internal gear teeth 40, the embodiment shown in Fig. 2 having twenty-six (26) such internal gear teeth 40. Disposed inside annulus gear 38 is circular gear 28, Fig. 2 showing the portion of circular gear 28 containing the first set 34 of external gear teeth. The embodiment depicted in Fig. 2 has twenty-five (25) such external gear teeth in the first set 34 thereof. Lightness in weight of circular gear 28 may be enhanced by webbed construction, which includes a plurality of radially disposed spokes 58 connecting an inner portion 60 with an outer portion 62 thereof. Circular gear 28 includes a central aperture 64 therein, which contains eccentric 26 freely mounted for rotation of circular gear 28 thereabout by means of bearings 30. Shown in dotted lines are the proximal 23 and distal 25 portions of transmission spindle shaft 24 to emphasize that eccentric 26 is disposed off-center with respect to fixedly disposed annulus gear 38. Thus, as transmission spindle shaft 24 rotates in the first direction (see Arrow A), eccentric 26 is rotated in a path eccentric to annulus center point C, thereby to cause the first set 34 of external gear teeth of circular gear 28 to overlap internal gear teeth 40 of annulus gear 38, to define thereby a point of maximum overlap $P_1$. As eccentric 26 rotates, with eccentric center point E revolving planetarily about annulus center point C the first set of external gear teeth 34 of circular gear 28 is forced into engagement with internal gear teeth 40 of fixedly disposed annulus gear 38. Inasmuch as eccentric 26 is mounted for free rotation by means of the circumferentially disposed bearings 30, the engagement between the respective gear teeth causes rotation of circular gear 28 in the opposite direction, as depicted by Arrow B. Thus, a hypocycloid is traced at reduced rotational speed within annulus gear 38 by circular gear 28.

Referring now to Figs. 2 and 4, the respective gear teeth 34a, 40a are in disengaged disposition, at the point of maximum overlap $P_1$ between first set 34 of external gear teeth of circular gear 28 and internal gear teeth 40 of fixedly disposed annulus gear 38, but are in engaged disposition at a distance therefrom of greater than 0°, but less than 90° as measured in the second direction, as indicated by Arrow B. The length of the engagement between the first set 34 of gear teeth of circular gear 28 and internal gear teeth 40 of annulus gear 38 is greatest near the point of maximum overlap $P_1$ between circular and annulus gears 28, 38. In Fig. 4, teeth 34b, 40b have the longest such engagement, with the length of the engagement respectively diminishing for gear teeth 34c, 40c, 34d, 40d and 34e, 40e, disposed at increasing distances from the point of maximum overlap $P_1$. The result is that the respective gear teeth of the first set of gear teeth of circular gear 28 and internal gear teeth 40 of annulus gear 38 first come under load while at maximum engagement, as shown in Figs. 2 and 4, and tip loading is prevented, which decreases the frictional loss of improved transmission apparatus 10 and prevents tip damage.

Referring now to Fig. 3, rotatable drive hub 42 having internally disposed gear teeth 44 is disposed within housing second portion 41 of improved transmission apparatus 10. Internal gear teeth 44 of drive hub 42 engage the second set 36 of external gear teeth of circular gear 28 upon overlap between circular gear 28 and drive hub 42. The overlap therebetween is as is discussed hereinabove in regard to Fig. 2. The teeth of the second set 36 of external gear teeth of circular gear 28 are twenty-five (25) in number, which corresponds to the twenty-five (25) internal gear teeth 44 of rotatable drive hub 42. Thus, the produced reverse rotational speed described hereinabove in connection with the hypocyclic motion between circular gear 28 within the fixedly disposed annulus gear 38 is transmitted to rotatable drive hub 42, as shown in Fig. 3. As above in Fig. 2, the overlap between second set 36 of external gear teeth of circular gear 28 and internal teeth 44 of drive hub 42 defines a point of maximum overlap therebetween $P_2$, which is in the same longitudinal plane as the point of maximum overlap $P_1$ between first set 34 of external gear teeth of circular gear 28 and internal gear teeth 40 of fixedly disposed annulus gear 38. Second set 36 of external gear teeth of circular gear 28 and internal teeth 44 of drive hub 42 are in disengaged disposition at the point of maximum overlap $P_2$, and in engaged disposition at a distance of greater than 0° but less than 90° as measured in the first direction, as shown by Arrow A. The length of the engagement between second set 36 of gear teeth of circular gear 28 and internal gear teeth 44 of drive hub 42 is greatest nearest the point of maximum overlap $P_2$, and the length of the engagement diminishes for gear teeth disposed at increasing distance from the point of maximum overlap $P_2$. Thus, the respective gear teeth 36, 44 first come under load while at a maximum engagement and tip loading is prevented thereby to decreased frictional loss and tip damage.

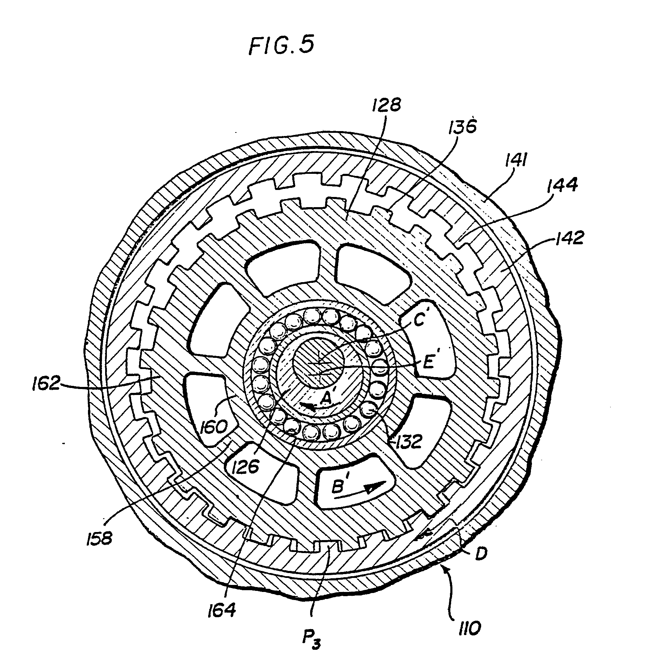

An alternative embodiment of the improved transmission apparatus of the present invention, as depicted in Fig. 5, is similar to the embodiment of Figs. 2—4, except for the number of gear teeth present in the second set of external gear teeth of the circular gear. Also, the gear teeth of such second set of external gear teeth are preferably shaped similarly to those of the first set of external gear teeth. In the embodiment of Fig. 5 the difference between the number of gear teeth must be the same as the difference between the second set of gear teeth of the circular gear and those of the drive hub. In such embodiment as shown in Fig. 5, the annulus gear has 26 gear teeth and the first set of external gear teeth of the circular gear has 25 gear teeth; and the drive hub has 25 gear teeth with the second set of external gear teeth having 24 gear teeth.

The gear reduction obtained by the embodiments of Figs. 2—4 and Fig. 5 are shown respectively in equations 1 and 2 as follows:

Equation 1

$$-R = \frac{Gc_1}{Gc_1 - Af}$$

Equation 2

$$R = \frac{Gc_1}{Gc_1 - Af} \times \frac{Hr}{Gc_2 - Hr}$$

where R is the gear ratio, $Gc_1$ and $Gc_2$ are the respective number of gear teeth in the circular gear 20 or 128, and Af and Hr are respectively the number of gear teeth in fixed annulus gear 38 and in rotatable drive hub 142.

Hence, applying the above equations, the embodiment of the improved transmission apparatus of the present invention as shown in Figs. 2—4 attains a gear ratio reduction of $-25:1$, and the "two stage" reduction gear of the embodiment of Fig. 5 attains a gear ratio of $+625$ to 1.

The method of operation of the alternative preferred embodiment as shown in Fig. 5 is somewhat different from the embodiments depicted hereinabove. One difference is that the rotational output is the same rotational direction as the rotational input, rather than in the reverse rotational direction as in the embodiment of Figs. 2—4. Another difference is that in the embodiment of Fig. 5 the first set of external gear teeth of the circular gear are in engaged disposition with respect to the annulus gear at a distance of greater than 0° but less than 90° as measured in the first direction, rather than in the second direction, as shown in the embodiment of Figs. 2—4. Also, the second set of external gear teeth is in engaged disposition with respect to the drive hub at a distance of greater than 0° but less than 90° from the point of maximum overlap as measured in the *second* direction. Furthermore, the length of such engagements in the alternative preferred embodiment of Fig. 5 are least nearest the point of maximum overlap between the circular gear teeth and respectively the annulus gear or drive hub, and the length of such engagement increases for gear teeth disposed at increasing distances from the point of maximum overlap.

Referring now to the drawing and to Fig. 5 in particular, rotatable drive hub 142 having internally disposed gear teeth 144 is disposed within housing portion 141 of improved transmission apparatus 110. Internal gear teeth 144 of drive hub 142 engage the second set 136 of external gear teeth of the circular gear 128 upon overlap between circular gear 128 and drive hub 142. The overlap therebetween is similar to that depicted in Figs. 2—4. The number of gear teeth in the second set 136 of external gear teeth of the circular gear 128 is 24 in number, whereas the number of gear teeth 144 in rotatable drive hub 142 is 25 in number. Thus, applying the formula described hereinabove, the gear reduction ratio attained by the "second stage" of Fig. 5 is 25 to 1. Multiplied by the 25 to 1 gear reduction of the "first stage", the resulting gear reduction for the entire apparatus is 625 to 1.

As in the embodiment set forth hereinabove with respect to Figs. 2—4, the overlap between the second set 136 of external gear teeth of circular gear 128 and internal teeth 144 of drive hub 142 defines a point of maximum overlap therebetween $P_3$. The second set 136 of external gear teeth of circular gear 128 and internal teeth 144 of drive hub 142 are in disengaged disposition at the point of maximum overlap $P_3$, and in engaged disposition at a distance of greater than 0° but less than 90° as measured in the second direction, as shown by Arrow B'. Contrastingly, the point of engagement is in the opposite side of the point of maximum overlap $P_3$ from that of the embodiment depicted in Figs. 2—4. The length of the engagement between the second set 136 of gear teeth of circular gear 128 and internal gear teeth 144 of drive hub 142 is least nearest the point of maximum overlap $P_3$, and the length of the engagement increases for gear teeth disposed at increasing radial distances from the point of maximum overlap $P_3$. Thus, the respective gear teeth 136, 144, first come under load while at a minimal engagement. Preferably, the point of such engagement is sufficiently far removed in distance from the tip of the gear to avoid tip loading and thus damage to such gear tips.

As in the embodiment of Figs. 2—4 lightness in weight of circular gear 128 is preferably enhanced by a webbed construction, which includes a plurality of radially disposed spokes 158 connecting an inner portion 160 with an outer portion 162 thereof.

The various gears in the improved hypocyclic transmission apparatus of the present invention may be made of any material of sufficient strength and durability, and non-machined materials are preferred: examples are forged, cast, molded or extruded metal, plastic, or other relatively rigid and durable materials.

## Claims

1. A hypocyclic drive transmission apparatus for reducing the rotational speed of the output of a motor and increasing the torque thereof, said apparatus comprising: a transmission spindle shaft (24) rotatable about a central axis in a first rotational direction (A): a circular gear (28) having first (34) and second (36) sets of lug-shaped, external gear teeth, said circular gear (28) being operatively connected to said transmission spindle shaft (24) for rotational movement thereby; a fixedly disposed annulus gear (38) having lug-shaped internal gear teeth (40), the internal gear teeth of said annulus gear being engageable with the first set (34) of external gear teeth of said circular gear (28) upon overlap between said circular gear and said annulus gear; eccentric means (26) fixedly mounted on said transmission spindle shaft, said eccentric means having a center defining a cam offset distance from said spindle shaft central axis, and freely mounting said circular gear (28) on for maintaining said circular gear (28) and said annulus gear (38) in overlapping relationship, for engaging the respective gear teeth thereof, and for tracing a hypocycloid at reduced rotational speed within said annulus gear (38) by said circular gear (28) in a second rotational direction (B) which is opposite the first rotational direction (A) of said transmission spindle shaft, said overlap defining a point of maximum overlap $(P_1)$; a rotatable drive hub (42) having internally disposed lug-shaped teeth (44) and disposed to surround a portion of said circular gear (28), the internal teeth (44) of said drive hub engaging the second set (36) of external gear teeth of said circular gear upon overlap between said circular gear and said drive hub; and rotational output means (46) connected to said drive hub (42) for receiving the reduced rotational speed output; characterised in that the first set (34) of external gear teeth of said circular gear (28) and the internal gear teeth (40) of said annulus gear (38) are disengaged at said point of maximum overlap $(P_1)$, and are in engagement at a circumferential distance of greater than 0 degrees but less than 90 degrees in one circumferential direction only from said point of maximum overlap.

2. Apparatus according to claim 1 characterised in that said one circumferential direction is said second rotational direction (B).

3. Apparatus according to claim 2 characterised in that the length of the engagement between the first set (34) of gear teeth of said circular gear (28) and said annulus gear (38) is greatest at those of the interengaging gear teeth (34, 40) nearest the point of maximum overlap of said circular and annulus gears, and the length of the engagement diminishes for gear teeth disposed at increasing distance from the point of maximum overlap.

4. Apparatus according to any preceding claim characterised in that the overlap between the second set (36) of external gear teeth of said circular gear (28) and the internal gear teeth (44) of said drive hub (42) defines a point of maximum overlap (P₂) therebetween, and the second set of external gear teeth (36) of said circular gear and the internal teeth (44) of said drive hub are in disengaged disposition at said point of maximum overlap (P₂), and are in engaged disposition at a circumferential distance of greater than 0° but less than 90° as measured in said first rotational direction, from the point of maximum overlap.

5. Apparatus according to claim 4 characterised in that the length of the engagement between the second set (36) of gear teeth of said circular gear (28) and said drive hub (42) is greatest of those of the interengaging gear teeth (36, 44) nearest the point of maximum overlap (P₂) between said circular gear (28) and said drive hub (42), and the length of the engagement diminishes for gear teeth disposed at increasing distance from the point of maximum overlap.

6. Apparatus according to claim 1 characterised in that the length of the engagement between the first set (34) of gear teeth of said circular gear (28) and said annulus gear (38) is least at those of the interengaging gear teeth (34, 40) nearest the point of maximum overlap of said circular and annulus gear, and the length of the engagement increases for gear teeth disposed at increasing distance from the point of maximum overlap.

7. Apparatus according to claim 6 characterised in that the overlap between the second set (36) of external gear teeth of said circular gear (28) and the internal gear teeth (44) of said drive hub (42) defines a point of maximum overlap (P₂) therebetween, and the second set of external gear teeth (36) of said circular gear and the internal teeth (44) of said drive hub are in disengaged disposition at said point of maximum overlap, and are in engaged disposition at a circumferential distance of greater than 0° but less than 90° as measured in said second rotational direction from the point of maximum overlap.

8. Apparatus according to claim 7 characterised in that the length of the engagement between the second set (36) of gear teeth of said circular gear (28) and said drive hub (42) is least at those of the interengaging gear teeth (36, 40) nearest the point of maximum overlap (P₂) between said circular gear (28) and said drive hub (42), and the length of the engagement increases for gear teeth disposed at increasing distance from the point of maximum overlap.

9. An apparatus as claimed in claim 1 characterised in that the number of teeth in said first set (34) of exterior gear teeth of said circular gear (28), and the number of internal gear teeth (40) of said annulus gear (38), differ by one.

**Patentansprüche**

1. Hypozyklische Antriebsübertragungsvorrichtung für die Verringerung der Drehgeschwindigkeit am Ausgang eines Motors und die Erhöhung des Drehmoments desselben, mit einer in einer ersten Drehrichtung (A) um eine zentrale Achse drehbaren Getriebewelle (24), einem mit der Getriebewelle (24) bewegungsübertragend verbundenen und durch diese in 8 Drehung versetzbaren kreisförmigen Zahnrad (28) mit einem ersten (34) und einem zweiten (36) Satz stollenförmiger äußerer Zähne, einem feststehend angeordneten Zahnring (38) mit stollenförmigen inneren Zähnen (40), welche beim Kämmen des kreisförmigen Zahnrads mit dem Zahnring in Analge an den äußeren Zähnen des ersten Satzes (34) des kreisförmigen Zahnrads (28) bringbar sind, einer fest an der Getriebewelle angebrachten Exzenteranordnung (26), deren Mittelpunkt um einen Versatzabstand gegenüber der Mittelachse der Getriebewelle versetzt ist und auf welcher das kreisförmige Zahnrad (28) frei drehbar gelagert ist, so daß es in einer mit dem Zahnring (38) kämmenden Position gehalten ist, in welcher die jeweiligen Zähne in gegenseitige Anlage bringbar sind, für die Erzeugung einer hypozyklischen Bewegung des kreisförmigen Zahnrad (28) innerhalb des Zahnrings (38) mit einer verringerten Drehgeschwindigkeit und in einer der ersten Drehrichtung (A) der Getriebewelle entgegengesetzten zweiten Drehrichtung (B), wobei durch die Kämmstellung ein tiefster Kämmpunkt (P1) definiert ist, einer drehbaren Triebnabe (42) mit innen angeordneten, stollenförmigen Zähnen (44), welche um ein Teil des kreisförmigen Zahnrads (28) herum angeordnet ist, so daß die inneren Zähne (44) der Treibnabe in einer Kämmstellung des kreisförmigen Zahnrads und der Triebnabe in Anlage an den Zähnen des zweiten Satzes (36) des kreisförmigen Zahnrads bringbar sind, und mit einer zur Übertragung der verringerten Ausgangs-Drehgeschwindigkeit mit der Treibnabe (42) verbundenen, drehbaren Abtriebseinrichtung (46), dadurch gekennzeichnet, daß sich die äußeren Zähne des ersten Satzes (34) des kreisförmigen Zahnrads (28) und die inneren Zähne (40) des Zahnrings (38) im tiefsten Kämmpunkt (P1) nicht in gegenseitiger Anlage befinden und in einem mehr als 0° und weniger als 90° betragendem Abstand in nur einer Umfangsrichtung vom tiefsten Kämmpunkt in gegenseitiger Anlage sind.

2. Vorrichtung nach Anspruch 1, dadurch gekennzeichnet, daß die eine Umfangsrichtung die zweite Drehrichtung (B) ist.

3. Vorrichtung nach Anspruch 2, dadurch gekennzeichnet, daß die Kämmtiefe zwischen den Zähnen des ersten Satzes (34) des kreisförmigen Zahnrads (28) und denen des Zahnrings (38) zunächst dem tiefen Kämmpunkts des kreisförmigen Zahnrads mit dem Zahnring am größten ist und sich für in zunehmendem Abstand vom tiefsten Kämmpunkt befindliche Zähne (34, 40) verringert.

4. Vorrichtung nach einem der vorstehenden Ansprüche, dadurch gekennzeichnet, daß der Kämmzustand zwischen den äußeren Zähnen des zweiten Satzes (36) des kreisförmigen Zahnrads (28) und den inneren Zähnen (44) der Triebnabe (42) einen tiefsten Kämmpunkt (P2) definiert und daß sich die äußeren Zähne (36) des zweiten Satzes des kreisförmigen Zahnrads und die inneren Zähne (44) der Triebnabe am tiefsten Kämmpunkt (P2) nicht in gegenseitiger Anlage befinden, während sie in einem in der ersten Drehrichtung gemessenen Umfangsabstand von mehr als 0° und weniger als 90° vom tiefsten Kämmpunkt in gegenseitiger Anlage sind.

5. Vorrichtung nach Anspruch 4, dadurch gekennzeichnet, daß die Eingriffstiefe zwischen den Zähnen des zweiten Satzes (36) des kreisförmigen Zahnrads (28) und denen der Triebnabe (42) bei den dem tiefsten Kämmpunkt (P2) zwischen dem kreisförmigen Zahnrad (28) und der Triebnabe (42) befindlichen Zähnen (36, 44) am größten ist und sich für in zunehmendem Abstand vom tiefsten Kämmpunkt befindliche Zähne verringert.

6. Vorrichtung nach Anspruch 1, dadurch gekennzeichnet, daß die Eingriffstiefe zwischen den Zähnen des ersten Satzes (34) des kreisförmigen Zahnrads (28) und denen des Zahnrings (38) bei den dem tiefsten Kämmpunkt zwischen dem kreisförmigen Zahnrad und dem Zahnring zunächst liegenden Zähnen (34, 40) am kleinsten ist und sich für in zunehmendem Abstand von tiefsten Kämmpunkt befindliche Zähne vergrößert.

7. Vorrichtung nach Anspruch 6, dadurch gekennzeichnet, daß der Kämmzustand zwischen den äußeren Zähnen des zweiten Satzes (36) des kreisförmigen Zahnrads (28) und den inneren Zähnen (44) der Triebnabe (42) einen tiefsten Kämmpunkt (P2) definiert, und daß die äußeren Zähne des zweiten Satzes (36) des kreisförmigen Zahnrads und die inneren Zähne (44) der Triebnabe am tiefsten Kämmpunkt nicht in gegenseitiger Anlage sind, während sie sich in einem in der zweiten Drehrichtung gemessenen Umfangsabstand von mehr als 0° und weniger als 90° von tiefsten Kämmpunkt in gegenseitiger Anlage befinden.

8. Vorrichtung nach Anspruch 7, dadurch gekennzeichnet, daß die Eingriffstiefe zwischen den Zähnen des zweiten Satzes (36) des kreisförmigen Zahnrads (28) und denen der Triebnabe (42) bei den dem tiefsten Kämmpunkt (P2) zwischen dem kreisförmigen Zahnrad (28) und der Triebnabe (42) zunächst befindlichen Zähnen (36, 40) am kleinsten ist und für die in zunehmendem Abstand vom tiefsten Kämmpunkt befindlichen Zähne zunimmt.

9. Vorrichtung nach Anspruch 1, dadurch gekennzeichnet, daß die Anzahl der äußeren Zähne des ersten Satzes (34) des kreisförmigen Zahnrads (28) und die Anzahl der inneren Zähne (40) des Zahnrings (38) um Eins verschieden sind.

## Revendications

1. Dispositif de transmission hypocycloïdal destiné à reduire la vitesse de rotation de la sortie d'un moteur et àuaugmenter le couple de ce dernier, ledit dispositif comprenant: un arbre broche de transmission (24) qui tourne autour d'un axe central dans un premier sens de rotation (A); une roue dentée circulaire (28) possédant un premier (34) et un deuxième (36) jeux de dents d'engrenage extérieures de forme droite, ladite roue dentée circulaire (28) étant accouplée fonctionnellement audit arbre broche (24) pour être entraînée en rotation par cet arbre; une roue dentée annulaire ou couronne (38) montée fixe, et possédant des dents d'engrenage intérieures (40) de forme droite, les dents d'engrenage intérieures de ladite roue dentée annulaire pouvant être mises en prise avec le premier jeu (34) de dents d'engrenage extérieures de ladite roue dentée circulaire (28) lorsqu'il y a recouvrement entre ladite roue dentée circulaire et ladite roue dentée annulaire; des moyens à excentrique (26) calés sur ledit arbre broche, lesdits moyens à excentrique possédant un centre qui définit une distance de levée de came par rapport à l'axe central dudit arbre broche, et qui supporte ladite roue dentée circulaire (28) montée folle sur lui pour maintenir ladite roue dentée circulaire (28) et ladite roue dentée annulaire (38) dans des positions relatives de recouvrement, pour mettre leurs dents d'engrenage respectives en prise, et pour faire décrire à ladite roue dentée circulaire (28) un hypocycloïde à une vitesse de rotation réduite à l'intérieur de ladite roue dentée annulaire (38), dans un deuxième sens de rotation (B) qui est opposé au premier sens de rotation (A) dudit arbre broche de transmission, ledit recouvrement définissant un point de recouvrement maximum (P1); un moyeu d'entraînement rotatif (42) portant des dents de forme droite (44), disposées intérieurement et ce moyeu étant disposé pour entourer une partie de ladite roue dentée circulaire (28), les dents intérieures (44) dudit moyeu d'entraînement étant en prise avec le deuxième jeu (36) de dents d'engrenage extérieures de ladite roue dentée circulaire lorsqu'il y a recouvrement entre ladite roue dentée circulaire et ledit moyeu d'entraînement; et des moyens de sortie rotatifs (46) accouplés audit moyeu d'entraînement (42), caractérisé en ce que le premier jeu (34) de dents d'engrenage extérieures de ladite roue dentée circulaire (28) et les dents d'engrenage intérieures (40) de ladite roue dentée annulaire (38) sont hors de prise audit point de recouvrement maximum (P1) et sont en prise à une distance circonférentielle dudit point de recouvrement maximum qui est supérieure à 0° mais inférieure à 90° dans un seul sens circonférentiel.

2. Dispositif selon la revendication 1, caractérisé en ce que ledit premier sens circonférentiel est ledit deuxième sens de rotation (B).

3. Dispositif selon la revendication 2, caractérisé en ce que la longueur de prise entre le premier jeu (34) de dents d'engrenage de ladite roue dentée circulaire (28) et ladite roue dentée annulaire (38) est à son maximum au niveau de celle des dents d'engrenage en prise (34, 40) qui sont les plus rapprochées du point de recouvrement maximum entre ladite roue dentée circulaire et ladite roue dentée annulaire, et la, longueur de la prise diminue pour les dents d'engrenage disposées à des distances croissantes du point de recouvrement maximum.

4. Dispositif selon l'une revendication précédente quelconque, caractérisé en ce que le recouvrement entre le deuxième jeu (36) de dents d'engrenage extérieures de ladite roue dentée circulaire (28) et les dents d'engrenage intérieures (44) dudit moyeu d'entraînement (42) définit un point de recouvrement maximum $(P_2)$ entre ce dents, et le deuxième jeu de dents d'engrange extérieures (36) de ladite roue dentée circulaire et les dents intérieures (44) dudit moyeu d'entraînement sont dans une position hors de prise audit point de recouvrement maximum $(P_2)$ et sont dans une position en prise à une distance circonférentielle du point de recouvrement maximum qui est supérieure à 0° mais inférieure à 90° mesurée dans ledit premier sens de rotation.

5. Dispositif selon la revendication 4, caractérisé en ce que la longueur de la prise entre la deuxième jeu (36) de dents d'engrenage de ladite roue dentée circulaire (28) et ledit moyeu d'entraînement (42) est à son maximum pour celles des dents d'engrenage en prise (36, 44) qui sont les plus proches du point de recouvrement maximum $(P_2)$ entre ladite roue dentée circulaire (28) et ledit moyeu d'entraînement (42) et la longueur de la prise diminue pour les dents d'engrenage disposées à des distances croissantes du point de recouvrement maximum.

6. Dispositif selon la revendication 1, caractérisé en ce que la longueur de prise entre le premier jeu (34) et les dents d'engrenage de ladite roue dentée circulaire (28) et ladite roue dentée annulaire est à son minimum au niveau de celles des dents d'engrenage en prise (34, 40) qui sont les plus proches du point de recouvrement maximum desdites roues dentées circulaire et annulaire, et la longueur de la prise croît pour les dents d'engrenages disposées à des distances croissantes du point de recouvrement maximum.

7. Dispositif selon la revendication 5, caractérisé en ce que le recouvrement entre le deuxième jeu (36) de dents d'engrenage extérieures de ladite roue dentée circulaire (28) et les dents d'engrenage intérieures (44) dudit moyeu d'entraînement (42) définit un point de recouvrement maximum $(P_2)$ entre ce dents, et le deuxième jeu de dents d'engrenage extérieures (36) de ladite roue dentée circulaire et les dents intérieures (44) dudit moyeu d'entraînement sont dans une disposition hors de prise au point de recouvrement maximum et sont dans une disposition en prise à une distance circonférentielle du point de recouvrement maximum qui est supérieure à 0° mais inférieure à 90°, mesurée dans ledit deuxième sens de rotation.

8. Dispositif selon la revendication 5, caractérisé en ce que la longueur de prise entre le deuxième jeu (36) de dents d'engrenage de ladite roue dentée circulaire (28) et dudit moyeu d'entraînement (42) est à son minimum au niveau de celles de dents d'engrenage en prise (36, 40) qui sont les plus proches du point de recouvrement maximum $(P_2)$ entre ladite roue dentée circulaire (28) et ledit moyeu d'entraînement (42), et la longueur de la prise croît pour les dents d'engrenage qui sont disposées à des distances croissantes du point de recouvrement maximum.

9. Dispositif selon la revendication 1, caractérisé en ce que le nombre de dents dudit premier jeu (34) de dents d'engrenage extérieures de ladite roue dentée circulaire (28) et le nombre de dents d'engrenage intérieures (40) de ladite roue dentée annulaire (38) diffèrent d'une unité.

FIG.1

0 108 841

FIG.2

FIG.4

FIG.3

FIG.5